# EUROPÄISCHE PATENTSCHRIFT

(11) **EP 1 291 609 B1**
(45) Veröffentlichungstag und Bekanntmachung des Hinweises auf die Patenterteilung: **27.08.2008**
(21) Anmeldenummer: 02017191.4
(22) Anmeldetag: 31.07.2002
(51) Int. Cl.: F41H 7/02, B60R 16/04

(54) **Gepanzertes Transportfahrzeug mit Batterie-Schwenkmechanismus**
Armoured vehicle with rotatable battery mechanism
Véhicule blindé avec installation de batterie rotative

(30) Priorität: 10.09.2001 DE 10144368
(43) Veröffentlichungstag der Anmeldung: 12.03.2003
(73) Patentinhaber: Rheinmetall Landsysteme GmbH, 24107 Kiel (DE)
(72) Erfinder: Schrepel, Tino, 24107 Kiel (DE); Hass, Frank, 24235 Wendtorf (DE); Wolff, Achim, 24576 Hagen (DE)
(74) Vertreter: Dietrich, Barbara

(56) Entgegenhaltungen:
- FR-A- 2 728 219
- US-A- 3 834 563
- US-A- 4 723 618
- US-A- 6 000 308
- DATABASE WPI Section PQ, Week 199740 Derwent Publications Ltd., London, GB; Class Q79, AN 1997-433628 XP002259550 -& RU 2 074 369 C (VASILENKO G V), 27. Februar 1997 (1997-02-27)

## Beschreibung

Die Erfindung bezieht sich auf ein gepanzertes Fahrzeug, das sich aus den üblichen Teilen wie Antriebsmotor, Getrieben, Radsätzen oder Kettenlaufwerk, einem Besatzungsraum und einem Gehäuse, das alle Ein- und Anbauten aufnimmt, zusammensetzt. Insbesondere bei einem Schützenkampffahrzeug werden mit dem Fahrzeug mehrere Soldaten transportiert, die schnell über eine Heckklappe aussteigen oder aufsitzen können. Bei einem anderen Fahrzeugtyp, dem gepanzerten Transport-Kraftfahrzeug, abgekürzt GTK, wird das Fahrzeug in Module eingeteilt und ein sogenanntes Missionsmodul austauschbar auf dem Chassis oder Fahrmodul untergebracht. Verschiedene Bewaffnungen und Ausrüstungen können dann als Modul austauschbar auf dem Fahrzeug wechselweise mitgeführt werden. Bei einer Fahrzeugvariante wird ein Führungsfahrzeug dargestellt, bei dem mehrere Soldaten im Fahrzeug an Datengeräten tätig werden und das Fahrzeug einen erhöhten elektrischen Energiebedarf hat. Alle diese Fahrzeuge besitzen eine elektrische Energieerzeugungs- und Speicheranlage, da Geräte und Fremdkrafteinrichtungen heute aus verschiedenen Gründen fast ausschliesslich mit elektrischer Energie betrieben werden. Dazu gehören auch Batterien für die entsprechende Energiespeicherung.

Nach dem Stand der Technik sind verschiedene Vorschläge zum Aufbau von Fahrzeugen und zu gepanzerten Transportfahrzeugen gemacht worden.

In der DE 4219688 wird ein luftverlastbares Panzerfahrzeug aus einem Fahrgestell und darauf angeordneten mehreren Gehäuseteilen aufgebaut, wobei ein Gehäuseteil aus einem fahrgestellfesten Unterteil und einem beweglichen Oberteil besteht, welches bei Lufttransport vertikal eingeschoben werden kann zur Verminderung des Fahrzeugvolumens.

In der DE 19502036 wird ein Kettenfahrzeug schnell und kostensparend an unterschiedliche Einsatzforderungen angepasst, in dem der Wannenaufbau modular gestaltet und aus mindestens zwei Modulen besteht.

In der DE 19619865 wird ein umrüstbares militärisches Radfahrzeug mit trennbaren Modulen dargestellt, das aus einem Grundgehäuse zur Aufnahme der Fahrzeugkomponenten besteht und von einem diesel-mechanischen zu einem diesel-elektrischen Antrieb umgebaut werden kann bei Vorteilen für die Bauhöhe und Ausgestaltung des Fahrzeugs.

Aus der DE 19927656A1 ist ein gepanzertes Transportkraftfahrzeug bekannt, welches mit einem unbemannten Schartenturm einschliesslich Lafette und Bordmaschinenwaffe als Bewaffnung ausgerüstet ist, der von der Besatzung aus dem Fahrzeuginneren fernbedient wird.

Bei einem Führungsfahrzeug für eine hochbewegliche Truppe, bei der die schnelle Verlegung von einem Einsatzort zu einem anderen ein besonderes Missionskennzeichen ist, müssen eine Vielzahl von Kommunikationsgeräten und -einrichtungen zur Erfüllung der Führungsaufgabe auf einem Fahrzeug untergebracht sein. Dafür wird auch mehr elektrischer Strom auf dem Fahrzeug benötigt, so dass aufladbare Zusatzbatterien zusätzlich zu der vorhandenen Fahrzeugbatterieanlage eingebaut werden. Diese Zusatzbatterien werden häufig in dem Gehäuseteil des Fahrzeugs, welcher oberhalb der Radsätze oder des Kettentrumms liegt, untergebracht. Dieser Teil wird auch Rad- oder Kettenschulter genannt. Damit ist die Zugänglichkeit der Batterie nach Öffnen von zum Beispiel einer Wartungsklappe prinzipiell gut, da sie ganz außen und oben und nicht versteckt im Fahrzeug eingebaut ist. Es stört jedoch, dass für die Ausführung von Wartungsarbeiten an der Batterie besondere Massnahmen und Hilfsmittel erforderlich sind. Die Batterien mit einem Gewicht von zum Beispiel 4 mal 40kg sind schwer und müssen manuell von zwei Personen entnommen werden.

Die bekannten Lösungen weisen zum Beispiel noch den Nachteil auf, dass für die Ausführung von Wartungsarbeiten an der Batterie oben auf dem Fahrzeug geklettert oder mittels Leiter oder Arbeitsbühne die Zugänglichkeit hergestellt werden muss. Dabei besteht oft die Bedingung, dass das Fahrzeugdach nicht betreten werden darf.

Die FR 2 728 219 A1 beschreibt eine Vorrichtung zum Herausheben einer Batterie aus einem Fahrzeug bzw. einem Motorraum. Ein Herausschwenken aus und Absetzen neben dem Fahrzeug wird hierbei nicht näher beschrieben.

Die US 3,83A,563 offenbart einen Mechanismus zum Herunterheben und Absetzen einer Batterie. Der Mechanismus weist ein fahrzeugfestes sowie ein batteriekastenfestes Drehpunkt. Benötigt wird jeweils ein starker Hydraulikzylinder.

Aufgabe der Erfindung ist es, einen Hebe-/ Schwenkmechanismus für eine Fahrzeugbatterie herzustellen, der die Zugänglichkeit zur Batterie ohne besondere Hilfsmittel für das Wartungspersonal ermöglicht.

Diese Aufgabe wird erfindungsgemäß durch Anspruch 1 gelöst. Weitere Merkmale ergeben sich aus den Unteransprüchen.

Erfindungsgemäß wird ein Batteriekasten oder -trog (2) mittels eines Schwenkmechansimus (3) angehoben und nach außen und unten (5) geschwenkt. Um die in der hochliegenden Radschulter von außen zugänglichen Zusatzbatterien ergonomisch günstig entnehmen zu können, wird für die Batterieverstauung ein Schwenkmechanismus vorgesehen, der es erlaubt, die Batterien seitlich aus der Radschulter heraus und gleichzeitig nach unten zu schwenken.

Die Vorteile der Erfindung liegen darin, dass nach Ausschwenken die Batterien auf eine niedrige Arbeitshöhe (6) kommen, so dass ein Bediener ohne Hilfsmittel daneben stehen und die Wartung vornehmen kann. Batterien sind schwer. Auch der Einsatz eines Hebemittels zur Batterieentnahme und -transport wird durch die nach außen verschwenkten Batterien einfacher als oben auf dem Fahrzeug.

Ausführungsbeispiele der Erfindung sind in den Zeichnungen schematisch dargestellt und werden im folgenden näher beschrieben. Es zeigen:
- Figur 1:: eine Schnittansicht des Fahrzeuges mit Batterie
- Figur 2:: eine Schnittansicht des Fahrzeuges mit ausgeschwenkter Batterie

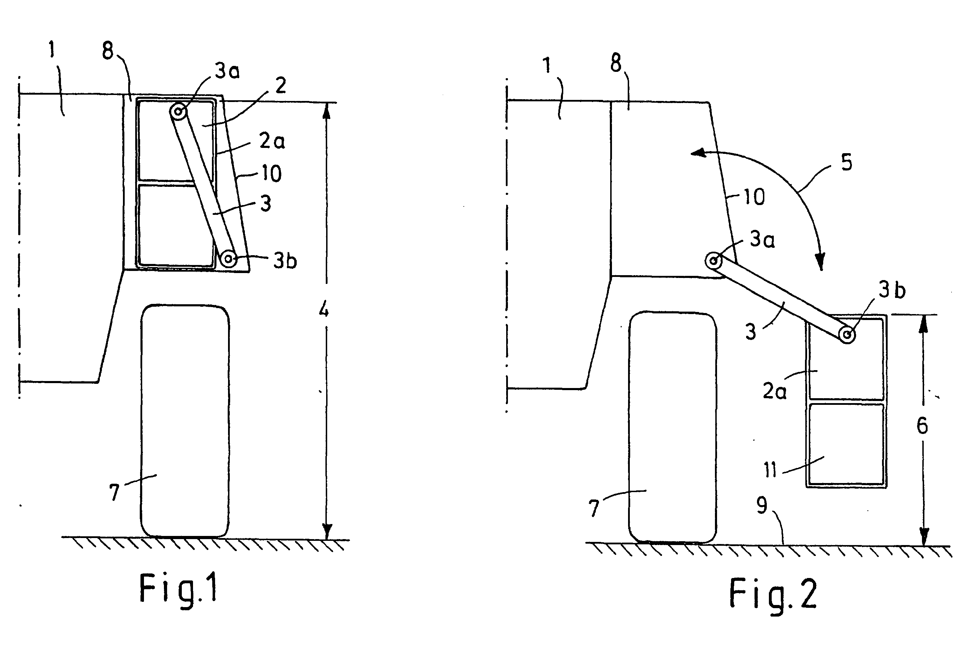

Figur 1, 2 zeigt ein halbseitig und im Querschnitt dargestelltes Fahrzeug 1 mit Rad 7 und Radschulter 8, in welche Batterien 2 in einem Batteriekasten 2a in Längsrichtung des Fahrzeugs 1 eingebaut sind. Ein Schwenkmechanismus zwischen Fahrzeug und Batteriekasten mit paarweise vorhandenem Hebel 3 besitzt eine fahrzeugfeste Drehlagerung 3b und eine batteriekastenfeste Drehlagerung 3a, mittels derer der Batteriekasten samt Batterien nach außen und weg vom Fahrzeug in Schwenkrichtung 5 geschwenkt werden kann in eine Endlage 11.

In Figur 2 ist die Funktionsstellung ausgeschwenkt mit Schwenkrichtung 5 dargestellt, womit der Batteriekasten eine geringe Höhe 6 über Boden 9 einnimmt. In Figur 1 ist die Höhe 4 des Batteriekastens über Boden größer als die Höhe 6 in Figur 2.

Damit der Batteriekasten 2 ausgeschwenkt werden kann, werden Türen oder Klappen (nicht dargestellt) in der Seitenwand 10 der Radschulter 8 eingebaut, die vor dem Ausschwenken geöffnet werden.

### Bezugszeichenliste

- 1: Fahrzeug
- 2: Batterien
- 2a: Batteriekasten
- 3: Hebel
- 3a: Drehlagerung
- 3b: Drehlagerung
- 4: Höhe
- 5: Schwenkrichtung
- 6: Höhe
- 7: Rad
- 8: Radschulter
- 9: Boden
- 10: Seitenwand
- 11: Endlage

## Patentansprüche

1. Gepanzertes Transportfahrzeug mit einer Batteriekastenschwenkanordnung und einem Radfahr- oder Kettenlaufwerk, über das Radfahr- oder Kettenlaufwerk angeordneten Radschultern (8), sowie einem Fahrzeugaufbau zur Aufnahme und Einbau aller Komponenten für den Betrieb des Fahrzeugaufbaus und einer Stromversorgungsanlage einschließlich Batterien (2), wobei
- ein die Batterien (2) aufnehmender, in Längsrichtung des Transportfahrzeuges (1) angeordneter Batteriekasten (2a) auf einer ersten Höhe (4) über den Boden auf einer Radschulter (8) des Tansportfahrzeuges untergebracht ist,
- der Batteriekasten (2a) mittels einemebenfalls auf der Radschulter (8) untergebrachten, mit Hebeln ausgestattetem Schwenkmechanismus (3,3a,3b) seitlich nach außen und gleichzeitig nach unten aus dem Transportfahrzeug in eine zweite Höhe (6) über den Boden (9) geschwenkt werden kann, wobei
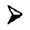 die zweite Höhe (6) eine geringere Höhe über den Boden als die erste Höhe (4) ist,
- der Schwenkmechanismus (3, 3a, 3b) mittels eines fremdkraft- oder bedienerbetätigten Spindelantrieb ausgeführt ist,
- der Schwenkmechanismus (3. 3a. 3b) aus zwei, in Fahrtrichtung hintereinander, jeweils an einem Ende des Batteriekastens (2a) befestigten Hebeln (3) besteht, wobei
- jeder Hebel ein fahrzeugfestes (3b) und ein batteriekastenfestes (3a) Drehgelenk besitzt und
- das batteriekastenfeste Drehgelenk (3a) oberhalb des Schwerpunktes des Batteriekastens (2a) angeordnet ist,
- wobei in der zweiten Höhe (6) die Oberkante der Batterien (2) unterhalb der Unterkante der Batterien (2) in der ersten Höhe ist.

2. Fahrzeug nach Anspruch 1, **dadurch gekennzeichnet, dass** der Schwenkmechanismus (3, 3,a, 3b) feder-, auch gasfederunterstützt ausgeführt ist.

3. Fahrzeug nach Anspruch 1 oder 2, **dadurch gekennzeichnet, dass** der Schwenkmechanismus mittels Parallelogrammführung an Hebel (3) und/ oder Aufhängung an einem Lagerpunkt (3a) oberhalb des Schwerpunkts des Batteriekastens (2a) ständig eine senkrechte Lage des Batteriekastens (2a) einstellt.

4. Fahrzeug nach einem der Ansprüche 1 bis 3, **dadurch gekennzeichnet, dass** der Schwenkmechanismus (3, 3a, 3b) in der nicht ausgeschwenkten Position des Batteriekastens (2a) im Fahrzeug zusätzlich die Funktion einer Transportverriegelung und Zurrung für den Fahrbetrieb übernimmt, womit der Batteriekasten (2a) in seiner Endlage im Fahrzeug (1) festgehalten und verzurrt wird.

## Claims

1. Armoured transport vehicle having a battery box pivoting arrangement and a wheel or track drive, wheel mudguards (8) arranged above the wheel or track drive and a vehicle structure for holding and installation of all the components for operation of the vehicle structure, and an electrical power supply installation including batteries (2), wherein
- a battery box (2a) which holds the batteries (2) and is arranged in the longitudinal direction of the transport vehicle (1) is accommodated at a first height (4) above the ground on a wheel mudguard (8) of the transport vehicle,
- the battery box (2a) can be pivoted by means of a pivoting mechanism (3, 3a, 3b), which is likewise accommodated on the wheel mudguard (8) and is equipped with levers, laterally outwards and at the same time downwards from the transport vehicle to a second height (6) above the ground (9), wherein
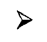 the second height (6) is a lower height above the ground than the first height (4),
- the pivoting mechanism (3, 3a, 3b) is operated by means of a spindle drive which is operated by external power or by an operator,
- the pivoting mechanism (3, 3a, 3b) comprises two levers (3) which are in each case mounted one behind the other in the direction of travel at one end of the battery box (2a), wherein
- each lever has a rotary joint which is fixed to the vehicle (3b) and a rotary joint which is fixed to the battery box (3a), and
- the rotary joint (3a) which is fixed to the battery box is arranged above the centre of gravity of the battery box (2a),
- wherein the upper edge of the batteries (2) at the second height (6) is below the lower edge of the batteries (2) at the first height.

2. Vehicle according to Claim 1, **characterized in that** the pivoting mechanism (3, 3a, 3b) has spring or else gas-spring assistance.

3. Vehicle according to Claim 1 or 2, **characterized in that** the pivoting mechanism continuously ensures that the battery box (2a) is in a vertical position, by means of parallelogram guidance on the lever (3) and/or suspension at a bearing point (3a) above the centre of gravity of the battery box (2a).

4. Vehicle according to one of Claims 1 to 3, **characterized in that** the pivoting mechanism (3, 3a, 3b) additionally carries out the function of a transport lock and lashing for driving operation when the battery box (2a) is not in the pivoted-out position in the vehicle, as a result of which the battery box (2a) is held firmly and lashed in its final position in the vehicle (1).

## Revendications

1. Véhicule de transport blindé comprenant un agencement pivotant de compartiment de batterie et un mécanisme de roulement à roues ou à chaîne, des épaulements de roue (8) disposés au-dessus du mécanisme de roulement à roues ou à chaîne, ainsi qu'une carrosserie de véhicule pour recevoir et incorporer tous les composants pour le fonctionnement de la carrosserie du véhicule et d'une installation d'alimentation électrique, y compris des batteries (2), dans lequel :
- un compartiment de batterie (2a) recevant les batteries (2), disposé dans la direction longitudinale du véhicule de transport (1), est monté à une première hauteur (4) au-dessus du sol sur un épaulement de roue (8) du véhicule de transport,
- le compartiment de batterie (2a) peut être pivoté au moyen d'un mécanisme de pivotement (3, 3a, 3b) muni de leviers, également monté sur l'épaulement de roue (8), latéralement vers l'extérieur et simultanément vers le bas depuis le véhicule de transport à une deuxième hauteur (6) au-dessus du sol (9),
^{*} la deuxième hauteur (6) étant à une moindre hauteur au-dessus du sol que la première hauteur (4),
- le mécanisme de pivotement (3, 3a, 3b) est réalisé au moyen d'un entraînement à broche actionné par une force extérieure ou par l'opérateur,
- le mécanisme de pivotement (3, 3a, 3b) se compose de deux leviers (3) l'un derrière l'autre dans la direction de conduite, fixés à chaque fois à une extrémité du compartiment de batterie (2a),
* chaque levier possédant une liaison pivotante fixée au véhicule (3b) et fixée au compartiment de batterie (3a) et
* la liaison pivotante (3a) fixée au compartiment de batterie est disposée au-dessus du centre de gravité du compartiment de batterie (2a),
* et, à la deuxième hauteur (6), l'arête supérieure des batteries (2) est en dessous de l'arête inférieure des batteries (2) à la première hauteur.

2. Véhicule selon la revendication 1, **caractérisé en ce que** le mécanisme de pivotement (3, 3a, 3b) est réalisé de manière supportée par ressort ou par ressort à gaz.

3. Véhicule selon la revendication 1 ou 2, **caractérisé en ce que** le mécanisme de pivotement ajuste constamment une position verticale du compartiment de batterie (2a) au moyen d'une suspension par parallélogramme au niveau du levier (3) et/ou d'une suspension au niveau d'un point de palier (3a) au-dessus du centre de gravité du compartiment de batterie (2a).

4. Véhicule selon l'une quelconque des revendications 1 à 3, **caractérisé en ce que** le mécanisme de pivotement (3, 3a, 3b) dans la position du compartiment de batterie (2a) non sortie par pivotement dans le véhicule, reprend en outre la fonction d'un verrouillage de transport et d'un amarrage pour le mode de conduite, avec lesquels le compartiment de batterie (2a) est fixé et amarré dans sa position finale dans le véhicule (1).
